**Europäisches Patentamt**

**European Patent Office**

**Office européen des brevets**

(19)

(11) Veröffentlichungsnummer: **0 005 735**

**A1**

(12) # EUROPÄISCHE PATENTANMELDUNG

(21) Anmeldenummer: **79101314.7**

(22) Anmeldetag: **02.05.79**

(51) Int. Cl.²: **H 04 L 27/20**

(30) Priorität: **26.05.78 DE 2822871**

(43) Veröffentlichungstag der Anmeldung:
**12.12.79 Patentblatt 79/25**

(84) Benannte Vertragsstaaten:
**AT DE FR NL**

(71) Anmelder: **ROBERT BOSCH GMBH**
**Postfach 50**
**D-7000 Stuttgart 1(DE)**

(72) Erfinder: **Schönke, Herbert**
**Zietenstrasse 4 a**
**D-1000 Berlin 46(DE)**

(74) Vertreter: **Schmidt, Hans-Ekhardt**
**Robert Bosch GmbH Geschäftsbereich Elektronik**
**Patent- und Lizenzabteilung Forckenbeckstrasse 9-13**
**D-1000 Berlin 33(DE)**

(54) Schaltungsanordnung zur Phasenmodulation.

(57) Es wird eine Schaltungsanordnung zur Phasenmodulation unter Erzeugung einer synchron phasenmodulierten Trägerfrequenz angegeben, die der gleichstromfreien Datenübertragung durch die Zweiseitenbandmodulation eines Hilfsträgers dient. Die Schaltungsanordnung umfaßt im wesentlichen einen Rechteck-Oszillator, einen Teiler, Exklusiv-Oder-Verknüpfungsglieder und eine Integratorschaltung, die so zusammengeschaltet sind, daß am Ausgang der Integratorschaltung ein Dreieck-Ausgangssignal geliefert wird, das zur maximalen Ausnutzung eines begrenzten Frequenzbandes bandbegrenzt wird und das mit dem bandbegrenzten Ausgangssignal eines reinen Sinus-Phasenmodulators im wesentlichen übereinstimmt.

Fig. 1

EP 0 005 735 A1

Croydon Printing Company Ltd.

Schaltungsanordnung zur Phasenmodulation

## Stand der Technik

Die Erfindung geht von einer Schaltungsanordnung nach der Gattung des Hauptanspruchs aus.

Es sind Schaltungsanordnungen mit Sinusoszillatoren bekannt, bei denen eine sinusförmige Trägerfrequenz mit einem Datensignal phasenmoduliert wird. Dabei werden beide Signale in einer Modulationsschaltung, zum Beispiel einem Ringmischer oder einem 4-Quadranten-Multiplizierer, multiplikativ gemischt, wobei die Trägerfrequenz unterdrückt und allein die Seitenbänder übertragen werden. Bei jedem Zustandswechsel des Datensignals erscheint im Ausgangssignal des Modulators ein $180^{\circ}$-Phasensprung, so daß mit einer Phasenmodulation durch Phasenumtastung (PSK) gearbeitet wird. Das Verfahren der Phasenmodulation durch Phasenumtastung eines Sinusoszillators ermöglicht eine gleichstromfreie Datenübertragung mit hohem Wirkungsgrad, aber ein Nachteil besteht darin, daß ein relativ großer schaltungstechnischer Aufwand erforderlich ist, um dieses Verfahren durchzuführen.

## Vorteile der Erfindung

Die erfindungsgemäße Schaltungsanordnung mit den kennzeichnenden Merkmalen des Hauptanspruchs hat den wesentlichen Vorteil, daß der Modulator zur Phasenumtastung aus nur wenigen Bauelementen aufgebaut ist und vorzugsweise ein Rechteck-Oszillator für das Erzeugen der Trägerfrequenz verwendet wird, so daß sich eine kostengünstige Herstellung erzielen läßt.

Zeichnung

Ein Ausführungsbeispiel der Erfindung ist an Hand der Zeichnung näher erläutert. Es zeigen:

Fig. 1 eine erfindungsgemäße Schaltungsanordnung mit Impulsdiagrammen und

Fig. 2 Impulsdiagramme einer herkömmlichen Schaltungsanordnung mit Sinusoszillator im Modulator.

Beschreibung der Erfindung

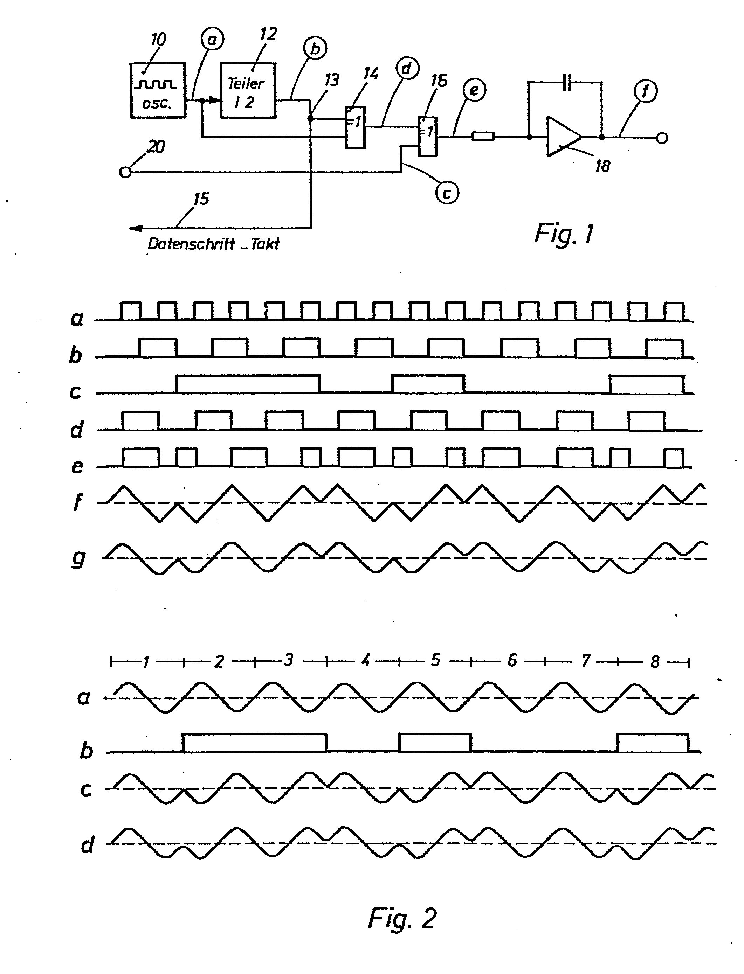

In Fig. 1 ist eine Schaltungsanordnung für einen Modulator zur Phasenmodulation durch Phasenumtastung gezeigt, wobei weiter an einzelnen Meßpunkten (a) bis (g) der Schaltungsanordnung aufgenommene Impulsdiagramme a bis g dargestellt sind.

Ein Rechteck-Oszillator 10 ist mit einem Teiler 12 und mit einem Eingang eines ersten Exklusiv-Oder-Verknüpfungsgliedes 14 verbunden. An einem weiteren Eingang des Verknüpfungsgliedes 14 liegt der Ausgang des Teilers 12 über einen Verbindungspunkt 13 an, von dem eine Leitung 15 mit einem Datenschritt-Takt abzweigt. Der Ausgang des ersten Verknüpfungsgliedes 14 ist auf einen Eingang eines zweiten Verknüpfungsgliedes 16 geführt, an dessen weiterem Eingang die Leitung einer Datenquelle angeschlossen ist, von der lediglich eine Anschlußklemme 20 gezeigt ist. Der Ausgang des zweiten Verknüpfungsgliedes 16 ist schließlich auf einen Eingang einer Integratoreinrichtung 18 geschaltet, deren Ausgang das bevorzugte phasenmodulierte Signal liefert.

In Fig. 2 sind Impulsdiagramme einer herkömmlichen Schaltungsanordnung mit einem Sinusoszillator im Modulator dargestellt.
Fig. 2 a zeigt dabei die sinusförmige Trägerfrequenz, während
in Fig. 2 b beispielhaft acht Schritte eines Datensignals dargestellt sind, mit dem die Trägerfrequenz phasenmoduliert wird.
Zu dem Zweck werden in einem Ringmischer oder 4-Quadranten-
Multiplizierer beide Signale multiplikativ gemischt. Das erhaltene phasenumgetastete Ausgangssignal ist in Fig. 2 c als zweiseitenbandmoduliert gezeigt, bei dem der Träger unterdrückt ist.
Bei jedem Zustandswechsel des Datensignals erscheint im phasenumgetasteten Signal ein $180^{\text{o}}$-Phasensprung. Auf der Empfangsseite
kann das Datensignal durch Mischen des phasenumgetasteten
Signals mit der Trägerfrequenz wiedergewonnen werden.

Der Rechteck-Oszillator 10 nach Fig. 1 erzeugt das Signal (a)
mit einer Frequenz $2f_T$ ($f_T$ = Datenschritt-Takt). Dieses Signal
wird auf einen Teiler 2 : 1 gegeben, so daß das Ausgangssignal (b)
des Teilers die Frequenz $f_T$ hat. Das Ausgangssignal aus dem
Teiler wird von der Datenquelle als Datenschritt-Takt für die
serielle Ausgabe der Daten verwendet. Die Signale (a) und (b)
werden auf das Exklusiv-Oder-Verknüpfungsglied 14 geführt, an dessen Ausgang ein Signal (d) mit der Frequenz $f_T$ um $90^{\text{o}}$ phasenverschoben geliefert wird. Dieses phasenverschobene Signal wird
mit Hilfe des zweiten Verknüpfungsgliedes 16 mit dem Datensignal (c) verglichen. Dabei entsprechen die acht Datenbits des
Datensignals (c) dem Datensignal (b) in Fig. 2. Das Ausgangssignal (e) des zweiten Verknüpfungsgliedes 16 steuert die Integratoreinrichtung 18 an. Die Integratoreinrichtung läßt sich vorteilhafterweise mit einem einfachen Logik-Inverter aufbauen. Das von der Integratoreinrichtung gelieferte Ausgangssignal (f) ist ein $180^\circ$-phasenmoduliertes Dreiecksignal mit der Frequenz $f_T$. Das erhaltene Signal ähnelt in seinem Verlauf dem Signal (c) nach Fig. 2.

Zur maximalen Ausnutzung eines begrenzten Frequenzbandes kann das phasenumgetastete Signal oberhalb $2f_T$ bandbegrenzt werden. Dann werden die in Fig. 1 g und Fig. 2 d gezeigten bandbegrenzten Ausgangssignale erhalten, die in ihrem Verlauf im wesentlichen übereinstimmen.

0005735
EK/PLI Rd/Li
24. Mai 1978

ROBERT BOSCH GMBH, Stuttgart

Ansprüche

1. Schaltungsanordnung zur Phasenmodulation unter Erzeugung einer synchron phasenmodulierten Trägerfrequenz mit einer im wesentlichen aus Logikbauelementen aufgebauten Schaltungseinrichtung, dadurch gekennzeichnet, daß die Schaltungseinrichtung als Rechteck-Oszillator (10) ausgebildet ist, daß der Rechteck-Oszillator (10) über einen Teiler (12) und direkt auf je einen Eingang eines ersten Verknüpfungsgliedes (14) geschaltet ist, daß der Ausgang des ersten Verknüpfungsgliedes und der Ausgang (20) einer Datenquelle je mit einem Eingang eines zweiten Verknüpfungsgliedes (16) zusammengeschaltet sind und daß der Ausgang des zweiten Verknüpfungsgliedes mit einem Eingang einer Integratorschaltung (18) verbunden ist.

2. Schaltungsanordnung nach Anspruch 1, dadurch gekennzeichnet, daß der Rechteck-Oszillator (10) für die doppelte Frequenz des Datenschritt-Taktes ausgelegt ist.

3. Schaltungsanordnung nach Anspruch 1, dadurch gekennzeichnet, daß die Verknüpfungsglieder (14, 16) als Exklusiv-Oder-Verknüpfungsglieder ausgeführt sind.

4. Schaltungsanordnung nach Anspruch 1, dadurch gekennzeichnet, daß die Integratorschaltung (18) aus einem Logik-Inverter aufgebaut ist.

111

Fig. 1

Fig. 2

0005735

Europäisches Patentamt

**EUROPÄISCHER RECHERCHENBERICHT**

Nummer der Anmeldung

EP 79 10 1314

| Kategorie | Kennzeichnung des Dokuments mit Angabe soweit erforderlich, der maßgeblichen Teile | betrifft Anspruch |
|---|---|---|
| | **EINSCHLÄGIGE DOKUMENTE** | |
| | GB - A - 1 368 069 (POST OFFICE)<br>  * Figur 4 * | 1,3 |
| | -- | |
| | ELECTRICAL DESIGN NEWS, Vol. 17<br>Nr. 18, 15. September 1972<br>New York, U.S.A.<br>P. ALFKE: "Exclusive-OR gates<br>simplify modem designs", Seite 43<br>  * Linke Spalte, Zeilen 1-10 * | 1,3 |
| | -- | |
| | US - A - 3 944 926 (FEHER)<br>  * Seite 36; Figur 3 * | 4 |
| | -- | |
| A | US - A - 3 335 369 (PRIEBE)<br>  * Spalte 2, Zeilen 58-63 * | 1,3 |
| | -- | |
| A | IBM TECHNICAL DISCLOSURE BULLETIN,<br>Vol. 5, Nr. 11, April 1963<br>New York, U.S.A.<br>Y. FANG et al.: "Digital Signal<br>Synchronous Modulation Circuits",<br>Seiten 94-96<br>  * Figur 2 * | 1,2 |
| | ---- | |

**KLASSIFIKATION DER ANMELDUNG (Int.Cl.²)**

H 04 L 27/20

**RECHERCHIERTE SACHGEBIETE (Int. Cl.²)**

H 04 L 27/20
       27/18
        5/12
       25/49

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-09-1979 | GEISLER |

EPA form 1503.1   06.78